# FASCICULE DE BREVET EUROPEEN

(11) **EP 0 479 686 B1**
(45) Date de publication et mention de la délivrance du brevet: **30.11.1994**
(21) Numéro de dépôt: 91420328.6
(22) Date de dépôt: 16.09.1991
(51) Int. Cl.: G01P 15/10

(54) **Micro-accéléromètre à résonateurs et procédé de fabrication**
Mikrobeschleunigungsmotor mit Resonatoren und Verfahren zu dessen Herstellung
Micro-accelerometer with vibrators and method of manufacture

(30) Priorité: 25.09.1990 FR 9012080
(43) Date de publication de la demande: 08.04.1992
(73) Titulaire: SEXTANT Avionique, F-92366 Meudon la Forêt Cedex (FR)
(72) Inventeur: Thomas, Isabelle, F-26000 Valence (FR); Lefort, Pierre Olivier, F-26000 Valence (FR)
(74) Mandataire: de Beaumont, Michel

(56) Documents cités:
- EP-A- 0 157 663
- US-A- 4 732 647
- US-A- 4 851 080
- IEEE PROCEEDINGS, VSLI AND COMPUTER PERIPHERALS, Hamburg, 8.-12. Mai 1989, 89CH2704-5, pages 3-39 - 3-47; W. BENECKE: "Micromechanical sensors"

## Description

La présente invention concerne une structure de micro-accéléromètre et un procédé de fabrication d'une telle structure.

On a développé ces dernières années divers types de micro-accéléromètres et autres micro-composants utilisant des techniques de fabrication voisines de celles des circuits intégrés.

On a ainsi fabriqué des structures monolithiques incluant une masse sismique portée par des suspensions reliées à un cadre. Les suspensions sont généralement conçues pour que la masse sismique puisse se déplacer perpendiculairement à son plan. La détection du déplacement de la masse sismique est classiquement effectuée ou bien en détectant une variation de capacité entre le plan de cette masse et un plan métallisé formé dans une enceinte support ou bien en détectant les déformations des suspensions. Ce type de micro-accéléromètre est connu de US-A-4 732 647.

Par ailleurs, on connaît des accéléromètres non monolithiques dans lesquels la détection est réalisée par des résonateurs. Ce type de détecteur est plus précis et donne des informations plus faciles à traiter.

On connaît aussi, par exemple, de US-A-4 851 080, un micro-accéléromètre directif plan et monolithique dans lequel la détection soit effectuée par des résonateurs incorporés de façon monolithique à l'ensemble du capteur.

La présente invention propose un nouveau type de micro-accéléromètre monolithique dans lequel les suspensions sont conçues pour autoriser le déplacement de la masse sismique dans une direction comprise dans le plan de cette masse et non pas perpendiculairement à celui-ci, et dans lequel la détection du déplacement de la masse sismique dans la direction concernée est réalisée à partir de la variation de la fréquence de résonance de résonateurs couplés à cette masse.

Plus particulièrement, la présente invention prévoit un micro-accéléromètre à résonateurs sensible à des accélérations dans une première direction comprenant, entre deux plaques support, une plaque intercalaire gravée pour comporter un cadre rectangulaire dont les côtés s'étendent selon la première et une deuxième direction perpendiculaire à la première, ces directions étant orthogonales à une troisième direction ; une masse sismique intérieure du cadre ; deux barres de suspension s'étendant entre le cadre et la masse selon la deuxième direction, de part et d'autre de la masse, et reliant le cadre à la masse, ces barres ayant sensiblement la même épaisseur que la masse et le cadre selon la troisième direction et une faible largeur selon la première direction ; deux éléments formant résonateurs s'étendant entre le cadre et la masse et ayant une épaisseur faible selon la troisième direction ; des moyens pour exciter les résonateurs ; et des moyens pour détecter la fréquence de vibration des résonateurs.

Selon un mode de réalisation de la présente invention, chacun des deux éléments formant résonateurs est constitué d'une lame s'étendant entre le cadre et la masse selon la première direction, de part et d'autre de la masse, et reliant le cadre à la masse.

Selon un mode de réalisation de la présente invention, chacun des résonateurs est disposé en regard d'une plaque support opposée, chaque plaque support comportant des moyens d'excitation du résonateur qui lui est associé.

Selon un mode de réalisation de la présente invention, la plaque intercalaire est en quartz et chacun des résonateurs est muni de métallisations propres à l'exciter par effet piézoélectrique.

Selon un mode de réalisation de la présente invention, la plaque intercalaire est en silicium.

Par ailleurs, dans le cas où la partie active du capteur en silicium, la présente invention prévoit un procédé de fabrication d'un micro-accéléromètre à résonateurs comprenant les étapes suivantes :
former une plaque de silicium dont les faces principales sont des plans (100), les première et deuxième directions étant parallèles à la direction cristallographique [110] ;
prégraver chacune des faces de la plaque de silicium en face de l'emplacement de chacun des résonateurs ;
masquer les emplacements où doivent se trouver le cadre, les résonateurs (sauf du côté prégravé), la masse sismique et les barres de suspension ; et
procéder à une gravure chimique par un agent provoquant une attaque s'étendant préférentiellement selon des plans (111) puis selon des plans (110) et poursuivre cette gravure jusqu'à ce que les résonateurs aient l'épaisseur souhaitée ;
d'où il résulte que, si les masques de gravure des barres de suspension ont des dimensions appropriées, ces barres ont une épaisseur égale à celle de la plaque intermédiaire et une largeur dans la première direction faible devant cette épaisseur.

Ces objets, caractéristiques et avantages ainsi que d'autres de la présente invention seront exposés plus en détail dans la description suivante de modes de réalisation particuliers faite en relation avec les figures jointes parmi lesquelles :
la figure 1 représente une vue de dessus schématique d'un micro-accéléromètre selon la présente invention ;
la figure 2 représente une vue en coupe selon la ligne y-y de la figure 1 ;
la figure 3 représente une vue en coupe selon la ligne x-x de la figure 1 ;
les figures 4 et 5 représentent des étapes successives de fabrication d'un micro-accéléromètre selon la présente invention dont la partie active est en silicium ; et
les figures 6A et 6B représentent une vue en coupe d'une suspension selon la présente invention lors de phases successives de gravure.

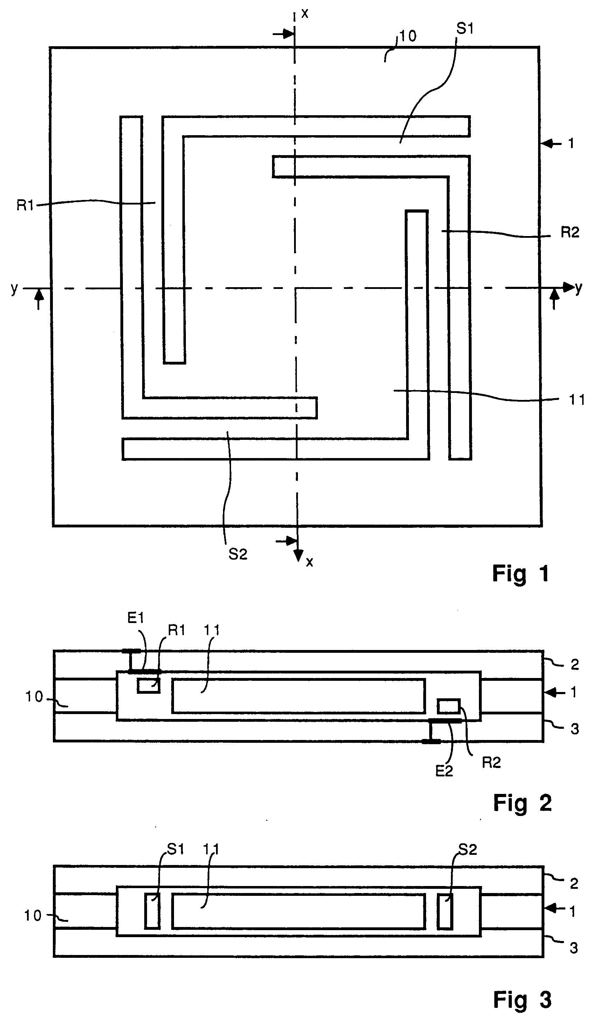

L'allure générale d'un micro-accéléromètre selon la présente invention est illustrée en vue de dessus en figure 1 et en coupe selon deux plans orthogonaux en figures 2 et 3. Comme le montrent les figures 2 et 3, ce micro-accéléromètre comprend de façon classique une plaque intercalaire 1 constituant la partie essentielle du capteur insérée entre deux plaques servant de support et de protection 2 et 3.

La figure 1 représente une vue de dessus schématique de la plaque intercalaire 1. Celle-ci est découpée (gravée) pour comprendre un cadre rectangulaire 10, représenté ici de forme carrée, et une masse sismique centrale 11 disposée à l'intérieur du cadre. Des barres de suspension S1 et S2 relient la masse 11 au cadre 10 et des résonateurs R1 et R2 sont disposés entre la masse 11 et le cadre 10.

Les barres de suspension S1 et S2 sont conformées pour être souples dans la direction x-x de sensibilité de l'accéléromètre et pour être rigides dans les deux autres directions, c'est-à-dire selon l'axe y-y et selon l'axe orthogonal z-z. Ces suspensions s'étendent sur leur grande longueur parallèlement à l'axe y-y, et présentent une épaisseur dans la direction z égale à l'épaisseur de la masse sismique et du cadre, c'est-à-dire l'épaisseur initiale de la plaque intercalaire 1. Par contre, dans la direction de l'axe des x, ces suspensions présentent une largeur inférieure à leur épaisseur. Ainsi, la masse sismique est susceptible de se déplacer sensiblement uniquement dans la direction de l'axe des x, les composantes de l'accélération dans d'autres directions étant sans effet.

Pour détecter le déplacement éventuel de la masse sismique 11 dans la direction de l'axe des x, sont prévus deux résonateurs constitués dans le mode de réalisation décrit à titre d'exemple de deux lames R1 et R2 qui s'étendent entre la masse sismique et le cadre selon la direction de l'axe des x. Pour présenter une forte sensibilité, ces résonateurs ont une épaisseur faible dans la direction de l'axe des z et sont en regard d'un ensemble d'électrodes d'excitation et de détection disposées sur la plaque support en face de laquelle ils se trouvent.

De préférence, comme cela apparaît en figure 2, les résonateurs sont disposés symétriquement par rapport au centre de la masse sismique ce qui permet de compenser d'éventuelles erreurs de fabrication et de réduire la sensibilité selon l'axe des z. En ce cas, chacun des résonateurs R1 et R2 est associé à des électrodes E1 et E2 respectivement disposées sur les plaques support 2 et 3.

Le mode d'excitation et de détection des résonateurs ne sera pas décrit ici car l'homme de l'art connaît diverses façons de réaliser ces fonctions.

Comme le représentent les figures 2 et 3, les plaques support ou plaques de protection 2 et 3 viennent s'appuyer sur le cadre 10 et enferment complètement l'ensemble de la masse sismique, des suspensions et des résonateurs. L'enceinte dans laquelle se trouve cet ensemble peut être mise sous vide ou sous atmosphère contrôlée.

Le matériau formant la plage intercalaire 1 et dans lequel sont gravés les éléments ci-dessus mentionnés peut être choisi parmi divers matériaux utilisés dans la réalisation de micro-composants.

On pourra par exemple utiliser du quartz monocristallin qui, quand il est convenablement orienté, se grave orthogonalement à ses faces principales dans des solutions de HF et de NH₄F. Dans ce cas, les résonateurs seront munis de métallisations propres à les exciter par effet piézoélectrique.

On va maintenant décrire à titre d'exemple un procédé de fabrication particulier de la structure selon l'invention dans le cas où la plaque intercalaire est en silicium.

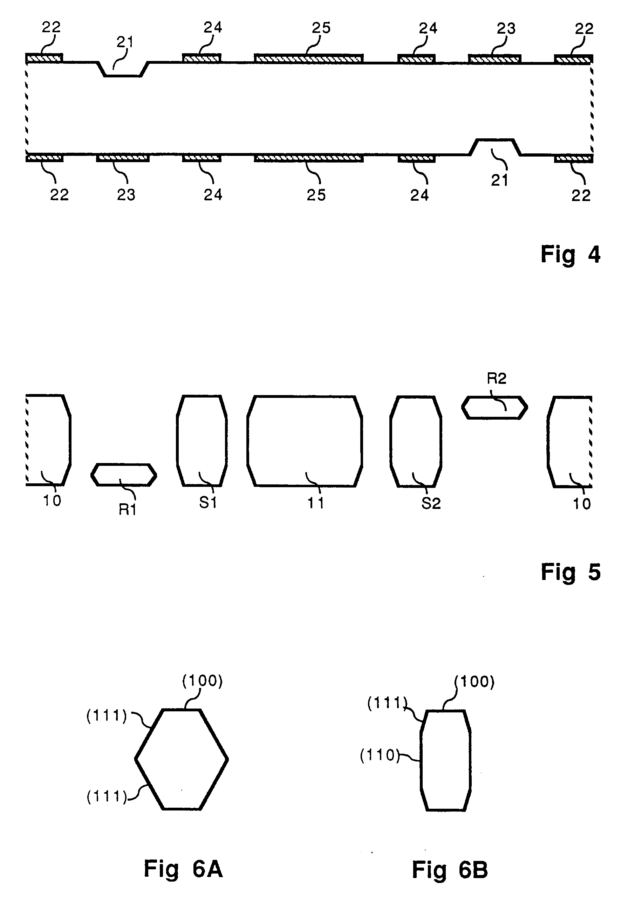

Ce procédé de fabrication sera décrit en relation avec les figures 4 à 5 dont on notera qu'elles ne sont pas tracées à l'échelle par rapport aux figures précédentes mais sont seulement destinées à permettre d'illustrer l'invention. Aucune échelle n'est non plus respectée dans la proportion entre les dimensions horizontales et verticales. D'autre part, on décrit ici la réalisation d'un composant unique. Il sera clair pour l'homme de l'art que de nombreux composants identiques pourront être formés simultanément sur une tranche de silicium ayant couramment une épaisseur de 0,30 à 0,5 mm.

Comme le représente la figure 4, on part d'une tranche de silicium dans laquelle on a réalisé des prégravures 21 en face des emplacements où l'on veut former les résonateurs. Ensuite, un masque de gravure est formé et comprend des régions 22 pour délimiter la région de cadre, des régions 23 pour délimiter les lames de résonateurs, des régions 24 pour délimiter les barres de suspension et des régions 25 pour délimiter la masse sismique. Les régions 22, 24 et 25 sont symétriques sur les deux faces. Les régions 23 sont prévues sur une seule face, à l'opposé des prégravures 21.

Selon la présente invention, la tranche de silicium est initialement orientée pour que ses faces principales se trouvent dans un plan cristallographique (100) et les directions x et y sont choisies pour être parallèles à la direction [110]. Dans ces conditions, la gravure est réalisée par une solution d'attaque produisant un creusement anisotrope du silicium telle que de l'éthylène-diamine-pyrocathécol ou de la potasse (KOH). Si l'on poursuit la gravure jusqu'à obtenir l'épaisseur souhaitée pour les résonateurs R1 et R2, on arrive à la structure illustrée en figure 5 dans laquelle de mêmes références désignent de mêmes éléments qu'en figures 1 à 3.

Plus particulièrement, l'effet des agents de gravure susmentionnés est illustré en figures 6A et 6B en relation avec la gravure d'une suspension. Dans un premier temps, la gravure s'étend selon des plans (111) et, ensuite, quand deux plans (111) de la face inférieure et de la face supérieure se rejoignent, comme cela est illustré en figure 6A, la gravure se poursuit pour dégager des plans (110), comme cela est illustré en figure 6B. On obtient donc directement par une opération de gravure unique la forme de suspension souhaitée présentant une largeur inférieure à son épaisseur, cette largeur étant conditionnée par le choix initial de la dimension des zones de masquage 24 (figure 4).

Ainsi, la présente invention propose un procédé de fabrication particulièrement simple et rapide puisqu'il fait appel à un procédé de gravure humide bien plus rapide et plus simple à mettre en oeuvre que les procédés de gravure sèche (gravure ionique réactive ou usinage ionique), ces derniers procédés présentant les inconvénients d'être complexes, lents, et hasardeux dans le cas où de grandes épaisseurs doivent être gravées, ce qui est le cas dans la présente invention où l'on veut éliminer complètement le silicium sur toute l'épaisseur d'une tranche.

En outre, la présente invention présente l'avantage de ne nécessiter que deux étapes de gravure : une prégravure telle qu'illustrée en figure 4 et une gravure finale telle qu'illustrée en figure 5.

La présente invention est susceptible de nombreuses variantes qui apparaîtront à l'homme de l'art, notamment en ce qui concerne la forme exacte du cadre et de la masse sismique, les formes des régions d'attache entre le cadre d'une part, la masse sismique d'autre part, et les résonateurs et suspensions. La position des points d'attache des barres de suspension à la masse sismique sera choisie pour optimiser la directivité de l'accéléromètre, et la position des points d'attaches des lames de résonateurs au cadre et à la masse sismique constitue, en fonction de leur épaisseur, un moyen de sélection de leur fréquence fondamentale de vibration.

Diverses techniques connues d'excitation et de détection de la vibration des résonateurs pourront être utilisées. De même, la formation et l'assemblage des plaques de protection peuvent faire appel à diverses techniques. On pourra par example utiliser des couches intermédiaires, prévoir divers moyens de passage de connexions et d'assemblage entre les diverses plaques, le moyen actuellement le plus courant étant la soudure anodique. Le matériau des plaques de protection sera adapté au matériau de la plaque intercalaire ; par exemple, si la plaque intercalaire est en quartz, on préfère actuellement utiliser un boîtier en céramique.

## Revendications

1. Micro-accéléromètre à résonateurs sensible à des accélérations dans une première direction comprenant, entre deux plaques support, une plaque intercalaire gravée pour comporter :
un cadre rectangulaire (10) dont les côtés s'étendent selon la première (x) et une deuxième (y) direction perpendiculaire à la première, ces directions étant orthogonales à une troisième direction (z) ;
une masse sismique (11) intérieure au cadre ;
deux barres de suspension (S1, S2) s'étendant entre le cadre et la masse selon la deuxième direction, de part et d'autre de la masse, et reliant le cadre à la masse, ces barres ayant sensiblement la même épaisseur que la masse et le cadre selon la troisième direction et une faible largeur selon la première direction;
deux éléments formant résonateurs (R1, R2) s'étendant entre le cadre et la masse et ayant une épaisseur plus faible que la masse et le cadre selon la troisième direction ;
des moyens pour exciter les résonateurs ; et
des moyens pour détecter la fréquence de vibration des résonateurs.

2. Micro-accéléromètre à résonateurs selon la revendication 1, caractérisé en ce que chacun des deux éléments formant résonateurs (R1, R2) est constitué d'une lame s'étendant entre le cadre et la masse selon la première direction, de part et d'autre de la masse, et reliant le cadre à la masse.

3. Micro-accéléromètre à résonateurs selon la revendications 1, caractérisé en ce que chacun des résonateurs (R1, R2) est disposé en regard d'une plaque support opposée (2, 3), chaque plaque support comportant des moyens d'excitation du résonateur qui lui est associé.

4. Micro-accéléromètre à résonateurs selon la revendication 1, caractérisé en ce que ladite plaque intercalaire est en quartz et que chacun des résonateurs est muni de métallisations propres à l'exciter par effet piézoélectrique.

5. Micro-accéléromètre à résonateurs selon la revendication 1, caractérisé en ce que ladite plaque intercalaire est en silicium.

6. Procédé de fabrication d'un micro-accéléromètre à résonateurs selon la revendication 5, caractérisé en ce qu'il comprend les étapes suivantes :
former une plaque de silicium dont les faces principales sont dans des plans (100), les première (x) et deuxième (y) directions étant parallèles à la direction cristallographique [110] ;
prégraver (21) chacune des faces de la plaque de silicium en face de l'emplacement de chacun des résonateurs ;
masquer les emplacements (22-25) où doivent se trouver le cadre, les résonateurs (sauf du côté prégravé), la masse sismique et les barres de suspension ; et
procéder à une gravure chimique par un agent provoquant une attaque s'étendant préférentiellement selon des plans (111) puis selon des plans (110) et poursuivre cette gravure jusqu'à ce que les résonateurs aient l'épaisseur souhaitée ; d'où il résulte que, si les masques de gravure des barres de suspension ont des dimensions appropriées, ces barres ont une épaisseur égale à celle de la plage intermédiaire et une largeur dans la première direction faible devant cette épaisseur.

7. Procédé de fabrication d'un micro-accéléromètre à résonateurs selon la revendication 6, caractérisé en ce que l'agent de gravure est de l'éthylène-diamine-pyrathécol ou de la potasse.

## Claims

1. A resonator micro-accelerometer sensitive to accelerations along a first direction comprising, between two supporting plates, an intermediate plate etched so as to include:
a rectangular frame (10), the sides of which extend along a first (x) and a second (y) direction perpendicular to the first one, said two directions being orthogonal to a third direction (z);
a seismic mass (11) inside the frame;
two supporting rods (S1, S2) extending between the frame and the mass along the second direction, on both sides of the mass, and connecting the frame to the mass, said rods having substantially the same thickness as the mass and frame along the third direction and a small width along the first direction;
two components constituting resonators (R1, R2) extending between the frame and the mass and having a small thickness along the third direction;
means for exciting the resonators; and
means for detecting the vibration frequency of the resonators.

2. A resonator micro-accelerometer according to claim 1, wherein each of the two components constituting said resonators (R1, R2) is formed by a strip extending between the frame and the mass along the first direction, on both sides of the mass, and connecting the frame to the mass.

3. A resonator micro-accelerometer according to claim 1, wherein each resonator (R1, R2) is arranged so as to face an opposite supporting plate (2, 3), each supporting plate including means for exciting the corresponding resonator.

4. A resonator micro-accelerometer according to claim 1, wherein said intermediate plate is made of quartz and each resonator is provided with metallizations adapted to excite it through piezoelectric effect.

5. A resonator micro-accelerometer according to claim 1, wherein said intermediate plate is made of silicon.

6. A method for manufacturing a resonator micro-accelerometer according to claim 5, comprising the following steps:
forming a silicon plate, the main surfaces of which are within the planes (100), the first (x) and second (y) directions being parallel to the crystallographic direction [110];
pre-etching (21) each surface of said silicon plate in front of the position of each resonator;
masking the positions (22-25) where the frame, the resonators (excepting on the pre-etched side), the seismic mass and the supporting rods have to be positioned; and
chemically etching with an etchant causing a preferential etching along planes (111) then along planes (110) and continuing etching until the resonators have the desired thickness;
whereby, if the etching masks of the supporting rods have appropriate sizes, said rods have a thickness equal to that of the intermediate plate and a width along the first direction small with respect to this thickness.

7. A method for manufacturing a resonator micro-accelerometer according to claim 6, wherein the etchant is ethylene-diamine-pyrocathecol or KOH.

## Patentansprüche

1. Mikrobeschleunigungsmesser mit Resonatoren, welcher auf Beschleunigungen in einer ersten Richtung empfindlich ist und zwischen zwei Trägerplatten eine Zwischenplatte aufweist, die geätzt ist, um folgende Merkmale zu erhalten:
einen rechteckigen Rahmen (10), dessen Seiten sich in der ersten Richtung (x) und in einer zweiten, zu der ersten senkrechten Richtung (y) erstrecken, wobei diese Richtungen orthogonal zu einer dritten Richtung (z) sind;
eine seismische Masse (11) innerhalb des Rahmens;
zwei Aufhängebalken (S1, S2), die sich jeweils zwischen dem Rahmen und einer bzw. einer zweiten Seite der Masse längs der dritten Richtung erstrecken und den Rahmen mit der Masse verbinden, wobei diese Balken im wesentlichen die gleiche Dicke wie die Masse und der Rahmen längs der dritten Richtung und eine geringe Breite längs der ersten Richtung aufweisen;
zwei Resonatoren (R1, R2) bildende Elemente, die sich zwischen dem Rahmen und der Masse erstrecken und eine geringere Dicke als die Masse und der Rahmen längs der dritten Richtung aufweisen;
Mittel zum Anregen der Resonatoren; ud
Mittel zum Erfassen der Schwingungsfrequenz der Resonatoren.

2. Mikrobeschleunigungsmesser mit Resonatoren nach Anspruch 1, dadurch gekennzeichnet, daß jedes der beiden Resonatoren (R1, R2) bildenden Elemente durch eine Zunge gebildet wird, die sich zwischen dem Rahmen und der Masse längs der dritten Richtung zu einer und einer zweiten Seite der Masse erstrecken und den Rahmen mit der Masse verbinden.

3. Mikrobeschleunigungsmesser mit Resonatoren nach Anspruch 1, dadurch gekennzeichnet, daß jeder Resonator (R1, R2) mit einer der gegenüberliegenden Stützplatten (2, 3) ausgerichtet angeordnet ist, wobei jede Trägerptatte Mittel zum Anregen des jeweiligen ihr zugeordneten Resonators aufweist.

4. Mikrobeschleunigungsmesser mit Resonatoren nach Anspruch 1, dadurch gekennzeichnet, daß die besagte Zwischenplatte aus Quarz ist, und daß jeder Resonator mit Metallisierungen versehen ist, die geeignet sind, ihn mit Hilfe des piezoelektrischen Effektes anzuregen.

5. Mikrobeschleunigungsmesser mit Resonatoren nach Anspruch 1, dadurch gekennzeichnet, daß die besagte Zwischenplatte aus Silizium ist.

6. Verfahren zum Herstellen eines Mikrobeschleunigungsmessers mit Resonatoren nach Anspruch 5, gekennzeichnet durch die folgenden Verfahrensschritte:
Bilden einer Siliziumplatte, deren Hauptflächen in den (100)-Ebenen liegen, wobei die erste (x) und die zweite (y) Richtung parallel zu der Kristattrichtung [110] sind;
Vorätzen (21) jeder Fläche der Sitiziumplatte gegenüber der Lage der Resonatoren;
Maskieren der Lagen (22 bis 25), an denen sich der Rahmen, die Resonatoren (bis auf die vorgeätzte Seite), die seismische Masse und die Aufhängebalken befinden sollen; und
Ausführen einer chemischen Ätzung durch ein Mittel, das eine Ätzung auslöst, die sich bevorzugt längs der (111)-Ebenen und anschließend längs der (110)-Ebenen erstreckt und Fortfahren dieser Ätzung, bis die Resonatoren die gewünschte Dicke haben;
wodurch dann, wenn die Ätzmasken der Aufhängebalken geeignete Dimensionen haben, diese Balken eine Dicke gleich derjenigen der Zwischenplatte und eine im Hinblick auf die Dicke geringe Breite längs der ersten Richtung aufweisen.

7. Verfahren zum Herstellen eines Mikrobeschleunigungsmessers mit Resonatoren nach Anspruch 6, dadurch gekennzeichnet, daß das Ätzmittel Ethylen-Diamin-Brenzcatechin oder Kaliumcarbonat ist.
